Europäisches Patentamt

European Patent Office

Office européen des brevets

(19)

(11) Veröffentlichungsnummer: **0 100 398**

A1

# (12) EUROPÄISCHE PATENTANMELDUNG

(21) Anmeldenummer: **83103699.1**

(22) Anmeldetag: **16.04.83**

(51) Int. Cl.³: **F 16 J 15/36**

(30) Priorität: **31.07.82 DE 3228751**

(43) Veröffentlichungstag der Anmeldung:
**15.02.84 Patentblatt 84/7**

(84) Benannte Vertragsstaaten:
**DE FR GB IT NL**

(71) Anmelder: **GOETZE AG**
**Bürgermeister-Schmidt-Strasse 17**
**D-5093 Burscheid 1(DE)**

(72) Erfinder: **Vossieck, Paul**
**Dürscheid 4**
**D-5093 Burscheid(DE)**

(54) Gleitringdichtung.

(57) Bei einer Gleitringdichtung, die mit einem Gegenring zusammenwirkt, ist ein Verbindungskörper in Form einer Feder vorgesehen, die sich, von der Gleitringdichtung ausgehend, axial zumindest bis zum Anfangsbereich des Gegenringes erstreckt. Vorzugsweise ist der Federkörper als Schraubenfeder ausgebildet und greift mit mindestens einer Windung und axialer und gegebenenfalls radialer Vorspannung hinter eine sich an einer Umfangsfläche des Gegenringes befindliche Nase.

FIG. 1

EP 0 100 398 A1

Croydon Printing Company Ltd.

- 1 -

Gleitringdichtung.

Die Erfindung betrifft eine Gleitringdichtung, bestehend aus einem Gleitring, einem Balgen, der den Gleitring im Bereich mindestens einer Umfangsfläche mindestens teilweise übergreift und im Bereich seiner dem Gleitring abgewandten Umfangsfläche in ein sich etwa axial erstreckendes Haftteil ausläuft, sowie einem mit der Gleitringdichtung verbundenen Gegenring.

Sogenannte Dichtungspatronen ( Gleitringdichtung plus Gegenring ), wie sie im gattungsbildenden Teil des Hauptpatentanspruches beschrieben worden sind, sind im Stand der Technik vielfach vertreten. Durch die GB - PS 807.140 ist zum Beispiel eine Gleitringdichtung bekannt, bei der die Verbindung zwischen der Gleitringdichtung und dem Gegenring durch einen Elastomerkörper erfolgt, der sich im Bereich der inneren Umfangsfläche der Gleitringdichtung, insbesondere des Gleitringes, bis radial hinter den Gegenring erstreckt. Hier ist nachteilig anzumerken, daß relativ viele Teile zum Aufbau der Gleitringdichtung verwendet worden sind, und daß zwischen dem Verbindungskörper und der statischen Abdichtung des rotierenden Gegenringes und dem stillstehenden Gleitring ein Gummiabrieb entsteht, der in den Dichtspalt gelangen und somit die Funktion der Gleitringdichtung beeinträchtigen kann.

Bei dem deutschen Gebrauchsmuster 7.805.378 wird der Balgen der Gleitringdichtung über den Gegenring hinaus axial verlängert und im Bereich des Dichtspaltes mit einer Sollbruchstelle versehen, die im Betriebszustand bei beginnender Rotation aufreißen und so die Gleitringdichtung vom Gegenring trennen soll. Wie schon vorab angesprochen, besteht auch hier die Gleitringdichtung aus relativ vielen Teilen. Gummipartikel, die beim Aufreißen der Sollbruchstelle entstehen, können ebenfalls das Dichtverhalten negativ beeinflussen.

In umgekehrter Weise ist durch die EP - PA 0 010 011 eine Gleitringdichtung bekannt, bei welcher am Gegenring eine axiale Verlängerung angeformt ist, die hinter die Gleitringdichtung greift. Auch hier sind der Aufbau und die Handhabungsweise der Gleitringdichtung als relativ kompliziert anzusehen.

Der Erfindung liegt daher die Aufgabe zugrunde, eine Gleitringdichtung ( Patrone ) zu konzipieren, die einerseits aus möglichst wenigen Teilen besteht, und andererseits die Gleitringdichtung ( Patrone ) konstruktiv so zu gestalten, daß sie den Gegenring während Transport, Lagerung und Montage sicher hält. Des weiteren soll im Einbauzustand ein gutes Trennen der Verbindung zwischen Gleitringdichtung und Gegenring gewährleistet werden und im Betriebszustand nicht - wie es beim Stand der Technik der Fall ist - störend auf das Funktionsverhalten der Dichtung einwirken.

Diese Aufgabe wird erfindungsgemäß dadurch gelöst, daß sich, von der Gleitringdichtung ausgehend, ein Federkörper zumindest bis zum Gegenring erstreckt. Eine Reihe von Möglichkeiten sind bei der Verwendung von Federkörpern denkbar. Der Verbindungskörper könnte ein gegebenenfalls am Balgen der Gleitringdichtung angeformter vorgespannter Elastomerkörper sein, der im Betriebszustand bei beginnender Rotation infolge seiner radialen Vorspannung vom Gegenring abspringt. Diese Möglichkeit ist jedoch nicht sehr sicher, da je nach Reibungsverhältnis Verbindungskörper / Gegenring ein Abreißen des Verbindungskörpers vom Balgen erfolgen kann und somit die

- 3 -

gleichen Nachteile wie beim Stand der Technik auftreten.

Eine bevorzugte Variante ist darin zu sehen, daß der Federkörper ein mit Einschnitten versehenes winkelförmiges Federblech ist. Je nach Anwendungsfall können die Einschnitte
sowohl im Bereich des Radial - als auch im Bereich des
Axialschenkels vorgesehen sein.

Vorzugsweise ist der Axialschenkel des Federkörpers, der sich,
von der Gleitringdichtung ausgehend, bis zum Gegenring erstreckt, zumindest im Bereich des Gegenringes radial auf
diesen zu abgebogen, wobei dieser im nicht eingebauten Zustand radial geklemmt wird. Wird die Gleitringdichtung
während der Montage axial vorgespannt, so läßt die radiale
Klemmspannung nach, und der Axialschenkel gibt den Gegenring
frei, so daß im Betriebszustand keine Behinderung / Reibung
zwischen dem Gegenring und dem Axialschenkel des Federkörpers auftreten kann.

Eine weitere bevorzugte Variante ist darin zu sehen, daß der
Federkörper eine die Gleitringdichtung und somit auch den
Gegenring umschließende Schraubenfeder ist. Der Federkörper
kann - je nach Ausbildung und Anwendungsfall der Gleitringdichtung - sowohl im Bereich der inneren als auch im Bereich
der äußeren Umfangsfläche angeordnet sein, bevorzugt wird
jedoch die Anordnung im Bereich der inneren Umfangsfläche.
Ist der Federkörper als Schraubenfeder ausgebildet, so besteht die Möglichkeit, diese im Bereich des Gegenringes
dergestalt zu wickeln, daß sie unter radialer Vorspannung
mit mindestens einer Windung an der korrespondierenden Umfangsfläche des Gegenringes anliegt und diesen so klemmt.
Der Verbindungskörper könnte dann während des Einbaues der

- 4 -

einstückigen Gleitringdichtungspatrone in das korrespondierende Maschinenteil mittels einer separaten Zunge am Einbauwerkzeug axial in Richtung der Gleitringdichtung verschoben werden, und zwar so weit, daß der Verbindungskörper das Funktionsverhalten der Gleitringdichtung, zum Beispiel durch Reibung am Gegenring, nicht mehr beeinflussen kann.

Eine weitere vorteilhafte Ausbildung des Erfindungsgegenstandes ist darin zu sehen, daß am Umfang des Gegenringes mindestens eine sich radial in Richtung auf den Federkörper erstreckende Nase angeformt ist, hinter die mindestens eine Windung des Federkörpers greift. Wie bereits vorab angesprochen, kann auch hier das Einbauwerkzeug so ausgebildet sein, daß es den Federkörper während des Einbaues der Gleitringdichtungseinheit axial vom Gegenring weg über die Nase in Richtung auf die Gleitringdichtung drückt.

Ist die Ausbildung des Einbauwerkzeuges als zu umständlich anzusehen, so besteht die Möglichkeit, die Nase beziehungsweise die Nasen umlaufend auszubilden, dergestalt, daß ein Gewinde entsteht. Durch diese Maßnahme wird sichergestellt, daß sowohl in Abhängigkeit von der Steigung des Gewindes und der Feder als auch von der Drehrichtung der Gleitringdichtung die Windung beziehungsweise die Windungen der Feder mit beginnender Rotation aus dem beziehungsweise den Gewindegängen am Gegenring herausschraubbar sind, ohne daß es zu Beschädigungen an einem der Bauteile kommt. Um lange Wege beziehungsweise lange Federn zu vermeiden, wird vorgeschlagen, daß die Nase beziehungsweise die Nasen etwa im der Gleitringdichtung zugewandten Stirnflächenbereich des Gegenringes angeordnet sind. Die Nase beziehungsweise die Nasen können ohne Schwierigkeiten am Gegenring angeformt werden und bedürfen in der

- 5 -

Regel auch keiner Nacharbeit, da die Umfangsfläche beziehungsweise - flächen keinen Einfluß auf das Dichtverhalten der Gleitringdichtung haben.

Sollte die vorab angesprochene Maßnahme, ein Gewinde am Gegenring vorzusehen, als nicht ausreichend zum sicheren Trennen von Gleitringdichtung und Gegenring angesehen werden, wird weiterhin vorgeschlagen, daß der Federkörper den Gegenring unter axialer Vorspannung am Gleitring hält. Infolge der der Feder während des Zusammenbaues der Gleitringdichtung aufgezwungenen Zugspannung springt die Feder, nachdem sie sich aus dem Gewinde am Gegenring herausgeschraubt hat, vollständig unter den Gleitring zurück, so daß im Betriebszustand keine Reibung zwischen dem Federkörper und dem Gegenring auftreten kann, die das Dichtverhalten beeinträchtigen könnte.

Eine Alternative zu der beziehungsweise den gewindeartig ausgebildeten Nasen am Gegenring zum axialen Fixieren der Federkörper ist darin zu sehen, daß die jeweilige Umfangsfläche gegebenenfalls durch eine Drehbearbeitung beziehungsweise einen Preßvorgang so rauh, gegebenenfalls gerichtet ausgebildet wird, daß der gleiche Effekt bei radialer Vorspannung der Feder wie bei der oder den Nasen erzielt werden kann.

Einem weiteren Gedanken der Erfindung gemäß wird das Versteifungsteil der Gleitringdichtung durch den Federkörper gebildet. Dadurch wird eine weitere Teilereduzierung erreicht. Eine Reihe von Möglichkeiten ergeben sich, den Federkörper im Bereich des Balgens und / oder des Haftteiles auszubilden. Bevorzugt ist der Federkörper so auszubilden, daß er der Kontur des Balgens und des Haftteiles im wesentlichen entspricht. Durch diese Lösung wird erreicht, daß der als Verbindungsteil die-

0100398

- 6 -

nende Federkörper die Gleitringdichtung im Betriebszustand axial gegen den Gegenring drückt, bei gleichzeitiger Versteifung der gesamten Gleitringdichtung.

Die Erfindung ist in der Zeichnung dargestellt und wird im folgenden näher beschrieben. Es zeigen

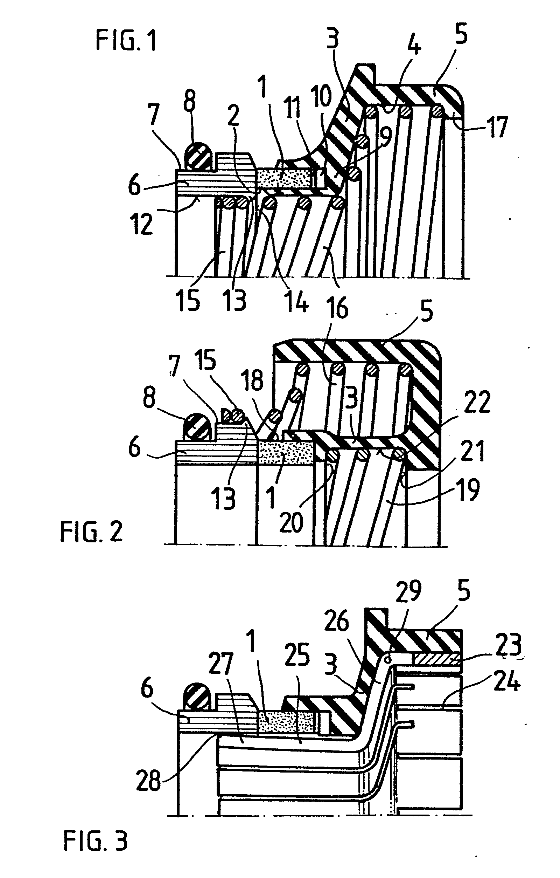

Figuren 1 bis 3  Unterschiedliche Ausbildung des Verbindungsteiles bei Gleitringdichtungen.

Die in Figur 1 dargestellte Gleitringdichtung besteht aus einem Gehäuse mit einem Gleitring 1, einem diesen an der inneren Umfangsfläche 2 umgreifenden kegelförmigen Balgen 3, der im Bereich seiner dem Gleitring 1 abgewandten Umfangsfläche 4 in ein sich axial erstreckendes Haftteil 5 ausläuft, sowie einem winkelförmigen Gegenring 6, der im Bereich seiner äußeren Umfangsfläche 7 eine statische Abdichtung im Form eines O - Ringes 8 aufweist. Im Bereich der Gleitringaufnahme 9 ist am Balgen 3 eine Drehmomentsicherung in Form von am Umfang gleichmäßig verteilten Erhebungen 10 vorgesehen. Diese greifen in korrespondierende Ausnehmungen 11 im Gleitring 1 ein und verhindern somit wirkungsvoll eine Verdrehung der Teile gegeneinander. An der inneren Umfangsfläche 12 des Gegenringes 6 ist eine umlaufende Nase 13 in unmittelbarer Nähe der Dichtfläche 14 angeformt, hinter welche einige Windungen 15 des als Verbindungsteil zwischen Gleitringdichtung und Gegenring 6 dienenden Federkörpers 16 in Form einer Schraubenfeder greift. Die Schraubenfeder 16 ist im Bereich von Gleitring 1 und Gegenring 6 zylindrisch ausgebildet, wobei die Windungen 15 den Gegenring 6 unter axialer Vorspannung am Gleitring 1 halten. Im Einbauzustand drehen sich die Windungen 15 bei beginnender Rotation unter

- 7 -

dem Gegenring 6 weg und springen - nachdem die letzte Windung 15 die Nase 13 passiert hat - unter den Gleitring 1. Die Transport - und Montageverbindung ist somit gelöst, störende Teile im Dichtflächenbereich sind keine mehr vorhanden. Die Feder 16 ist weiterhin so ausgebildet, daß sie sowohl der Kontur des Balgens 3 als auch der Kontur des Haftteiles 5 angepaßt ist. Die Feder 16 stützt sich hierbei axial an einem am Haftteil 5 angeformten Radialschenkel 17 ab. Durch diese Ausbildung der Feder 16 werden zwei Vorteile erreicht, zum einen wird das elastomere Haftteil 5 versteift, und zum anderen wird die Gleitringdichtung, das heißt der den Gleitring 1 tragende Balgen 3, im Einbauzustand axial an den Gegenring 6 gedrückt.

Die Gleitringdichtung gemäß den Figuren 2 und 3 besteht im wesentlichen aus den gleichen Teilen, wie vorab schon angesprochen, so daß im wesentlichen die gleichen Bezugszeichen gelten. Der konstruktive Aufbau der Gleitringdichtung gemäß Figur 2 ist etwas anders als der in Figur 1. Der Gleitring 1 wird hier im Bereich seiner äußeren Umfangsfläche 18 vom Balgen 3 übergriffen. Dieser ist im wesentlichen L - förmig ausgebildet und läuft in ein sich axial erstreckendes Haftteil 5 aus, so daß ein U - förmiges Gehäuseteil gebildet wird. Die Verbindung zwischen der Gleitringdichtung und dem winkelförmigen Gegenring 6 erfolgt auch hier durch einen Federkörper 16 in Form einer Schraubenfeder, deren Windungen 15 hinter eine an der äußeren Umfangsfläche 7 des Gegenringes 6 angeformten Nase 13 greifen. In Abwandlung zu Figur 1 ist die Feder 16 nicht so ausgebildet, daß sie der Kontur des Balgens 3 und des Haftteiles 5 folgt. Daher ist sie auch nicht in der Lage, die nötige axiale Anpreßkraft aufzubringen. Dies wiederum geschieht durch eine weitere zylindrische Feder 19, die sich axial zwischen radialen Stützflächen 20,21 am Innenumfang 22 des Balgens 3 erstreckt.

Figur 3 entspricht im wesentlichen Figur 1 mit dem Unterschied, daß der Federkörper 23 keine Schraubenfeder, sondern ein mit radialen und axialen Einschnitten 24,25 versehenes Federblech ist. Das Federblech 23 ist derartig gebogen, daß der Radialschenkel 26 der kegeligen Form des Balgens 3 folgt, jedoch im Bereich seines Axialschenkels 27 nicht zylindrisch, sondern leicht kegelig, radial in Richtung des Gegenringes 6 weisend, abgebogen ist. Dadurch wird sichergestellt, daß der Gegenring 6 durch das Ende 28 des Axialschenkels 27 unter radialer und auch geringfügiger axialer Vorspannung mit der Gleitringdichtung verbunden ist. Während des Montagevorganges wird der Balgen 3 axial in Richtung auf das Haftteil 5 verformt. Bedingt durch diese Verformung, wird auch das Federblech 23 geringfügig um seinen Drehpunkt 29 geschwenkt und gibt so den Gegenring 6 frei. Gleichzeitig wird die axiale Anpassung des Gleitringes 1 an den Gegenring 6 und die radiale Anpressung des Haftteiles 5 für die statische Abdichtung sichergestellt.

- 1 -

Patentansprüche:

1. Gleitringdichtung, bestehend aus einem Gleitring, einem Balgen, der den Gleitring im Bereich mindestens einer Umfangsfläche mindestens teilweise übergreift und im Bereich seiner dem Gleitring abgewandten Umfangsfläche in ein sich etwa axial erstreckendes Haftteil ausläuft, sowie einem mit der Gleitringdichtung verbundenen Gegenring, dadurch gekennzeichnet, daß sich, von der Gleitringdichtung ausgehend, ein Federkörper ( 16,23 ) zumindest bis zum Anfangsbereich der Umfangsfläche ( 7,12 ) des Gegenringes ( 6 ) erstreckt.

2. Gleitringdichtung nach Anspruch 1, dadurch gekennzeichnet, daß der Federkörper ( 23 ) ein mit Einschnitten ( 24,25 ) versehenes winkelförmiges Federblech ist.

3. Gleitringdichtung nach den Ansprüchen 1 und 2, dadurch gekennzeichnet, daß sowohl im Bereich des Radial - ( 26 ) als auch im Bereich des Axialschenkels ( 27 ) Einschnitte ( 24,25 ) vorgesehen sind.

4. Gleitringdichtung nach den Ansprüchen 1 bis 3, dadurch gekennzeichnet, daß der Axialschenkel ( 27 ) des Federkörpers ( 23 ) zumindest im Bereich des Gegenringes ( 6 ) radial auf diesen zu abgebogen ist.

5. Gleitringdichtung nach Anspruch 1, dadurch gekennzeichnet, daß der Federkörper ( 16 ) eine die Gleitringdichtung umschließende Schraubenfeder ist.

6. Gleitringdichtung nach den Ansprüchen 1 bis 5, dadurch

- 2 -

gekennzeichnet, daß der Federkörper ( 16,23 ) im Bereich der inneren Umfangsfläche ( 12 ) der Gleitringdichtung und des Gegenringes ( 6 ) angeordnet ist.

7 . Gleitringdichtung nach den Ansprüchen 1 bis 6, dadurch gekennzeichnet, daß der Federkörper ( 16,23 ) unter radialer Vorspannung zumindest an der Umfangsfläche ( 12 ) des Gegenringes ( 6 ) anliegt.

8 . Gleitringdichtung nach den Ansprüchen 5 bis 7, dadurch gekennzeichnet, daß der Federkörper ( 16 ) mit mindestens einer Windung ( 15 ) an der Umfangsfläche ( 12 ) des Gegenringes ( 6 ) anliegt.

9 . Gleitringdichtung nach den Ansprüchen 5 bis 8, dadurch gekennzeichnet, daß am Umfang ( 7,12 ) des Gegenringes ( 6 ) mindestens eine sich radial in Richtung auf den Federkörper ( 16 ) erstreckende Nase ( 13 ) angeformt ist, hinter die mindestens eine Windung ( 15 ) des Federkörpers ( 16 ) greift.

10 . Gleitringdichtung nach den Ansprüchen 5 bis 9, dadurch gekennzeichnet, daß die Nase beziehungsweise die Nasen ( 13 ) an der Umfangsfläche ( 7,12 ) des Gegenringes ( 6 ) umlaufend ausgebildet sind.

11 . Gleitringdichtung nach den Ansprüchen 5 bis 9, dadurch gekennzeichnet, daß die Nasen ( 13 ) gewindeartig ausgebildet sind.

12 . Gleitringdichtung nach den Ansprüchen 5 bis 10, dadurch gekennzeichnet, daß die Steigung des oder der Gewinde-

- 3 -

gänge der Nase beziehungsweise Nasen ( 13 ) und die der Federkörper ( 16 ) übereinstimmen, dergestalt, daß die Windungen des Federkörpers ( 16 ) in Abhängigkeit von der Drehrichtung aus dem beziehungsweise den Gewindegängen herausdrehbar sind.

13 . Gleitringdichtung nach den Ansprüchen 5 bis 12, dadurch gekennzeichnet, daß die Nase beziehungsweise die Nasen ( 13 ) etwa im der Gleitringdichtung zugewandten Stirnflächenbereich ( 14 ) des Gegenringes ( 6 ) vorgesehen sind.

14 . Gleitringdichtung nach den Ansprüchen 5 bis 13, dadurch gekennzeichnet, daß der Federkörper ( 16 ) den Gegenring ( 6 ) unter axialer Vorspannung am Gleitring ( 1 ) hält.

15 . Gleitringdichtung nach den Ansprüchen 5 bis 13, dadurch gekennzeichnet, daß der Federkörper ( 16 ) das Versteifungsteil der Gleitringdichtung bildet.

16 . Gleitringdichtung nach den Ansprüchen 1 bis 15, dadurch gekennzeichnet, daß der Federkörper ( 16,23 ) entsprechend der Kontur des Balgens ( 3 ) und / oder des Haftteiles ( 5 ) geformt ist.

17 . Gleitringdichtung nach den Ansprüchen 1 bis 16, dadurch gekennzeichnet, daß die Gleitringdichtung im Betriebszustand durch den als Verbindungskörper dienenden Federkörper ( 16,23 ) an den Gegenring ( 6 ) andrückbar ist.

1/1

FIG. 1

FIG. 2

FIG. 3

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | FR-A-2 182 272 (REGIE NATIONALE DES USINES RENAULT) * Seite 3, Zeile 25 - Seite 4, Zeile 17; Figuren 1-4 * --- | 1 | F 16 J 15/36 |
| A | FR-A-2 436 305 (SOC. INT. MECANIQUE INDUSTRIELLE) * Seite 3, Zeilen 14-21; Figur 2 * ----- | 1 | |

|  |
|---|
| RECHERCHIERTE SACHGEBIETE (Int. Cl. ³) |
| F 16 J<br>F 04 D |

Der vorliegende Recherchenbericht wurde für alle Patentansprüche erstellt.

| Recherchenort | Abschlußdatum der Recherche | Prüfer |
|---|---|---|
| DEN HAAG | 09-11-1983 | LEGER M.G.M. |